Europäisches Patentamt

European Patent Office

Office européen des brevets

(11) Publication number: **0 493 936 A1**

# EUROPEAN PATENT APPLICATION

(21) Application number: **91311802.2**

(22) Date of filing: **19.12.91**

(51) Int. Cl.5: **G07C 9/00**, G06K 9/22, G06K 7/10

(30) Priority: **03.01.91 GB 9100048**

(43) Date of publication of application:
**08.07.92 Bulletin 92/28**

(84) Designated Contracting States:
**DE FR GB IT**

(71) Applicant: **NATIONAL RESEARCH DEVELOPMENT CORPORATION**
**101 Newington Causeway**
**London SE1 6BU(GB)**

(72) Inventor: **Bates, Stephen James**
**22 St Anne's Lane, Godmanchester**
**Huntingdon, Cambs PE18 8JE(GB)**
Inventor: **Douglas, Keith**
**4 Thickwillow, Godmanchester**
**Huntingdon, Cambs PE18 8LR(GB)**

(74) Representative: **Hasler, Christopher**
**Patent Department National Research**
**Development Corporation 101 Newington**
**Causeway**
**London SE1 6BU(GB)**

(54) **Apparatus and method for use with an indicating instrument.**

(57) In some data entry and signature verification devices a pen (12) is used to write on a surface (14) carrying lines (15). A light sensor (11) detects line crossings and a pen-output signal is derived from which data entered can be identified or a signature can be recognised. A threshold is used to distinguish troughs in the output signal as a line is crossed but the general level of troughs and peaks (corresponding to space between lines) varies, due to the orientation of the pen, making the threshold level difficult to fix. In the invention a peak detector is used which derives a threshold level which varies with changes in pen output caused by pen orientation but does not vary significantly when lines on the surface are crossed at normal writing speed. Another threshold is also used which allows a signal to be derived indicating whether the pen is in contact with the surface.

Fig.1

The present invention relates to an apparatus and method for indicating when an indicating instrument, such as a pointing instrument or pen, crosses marks on a surface. The invention is particularly useful for indicating when a pen used for writing or signing crosses parallel lines already printed on paper.

British Patent Specification 2,183,071 (and corresponding US Application 548192) describe a data input method and a signature verification method which involve providing a signal indicating when a pen used for signing crosses marks such as parallel lines on a writing surface. Variations of these methods are described in the specifications of British Patent Application 8801703.3 (corresponding to US Patent 4963859) and British Patent Application No. 9024383.3 (corresponding to US Application 610209). The disclosures of these specifications are hereby incorporated into this specification.

According to the present invention there is provided apparatus for providing signals indicating when the tip of an indicating instrument crosses marks on a surface, comprising

light-sensitive means mounted, in operation, to sense variations in light received from a surface at the tip of an indicating instrument and for generating a sensor-output signal having variations in magnitude corresponding to the tip crossing marks on the surface,

peak-detector means for detecting peaks in the sensor-output signal having a time constant which is long in relation to the expected durations of the said variations in magnitude but short in relation to expected changes in the orientation of the indicating instrument relative to the surface, and

comparison means for comparing the sensor-output signal with a threshold signal having a magnitude less than that of the output of the peak detector means by an amount significantly less than the variation from peak to trough in the said variations, the output of the comparison means being a substantially two value signal with intervals, during which one of the values occurs, corresponding to mark crossings.

For data input and signature verification the indicating instrument may be a writing instrument, the surface may be a writing surface and the marks are usually parallel lines.

Apparatus according to the invention may include means for projecting light onto the surface at the point where the indicating instrument is in contact with the surface, or is adjacent thereto. The light projected may be at substantial levels at one or several wavelengths only and the light sensitive means may then be much more sensitive to one or more of these wavelengths than to light of other wavelengths. When the indicating instrument is a pen or pencil which leaves a trail on the writing surface the wavelengths of the projected light are preferably different from those of light reflected by the trail and the light sensitive means is relatively insensitive to such reflected light.

Preferably the threshold signal has a magnitude which is less than that of the output of the peak detector means by an amount approximately equal to half the amplitude of the said variations in magnitude.

Apparatus according to the invention may include means for comparing the sensor-output signal with a further threshold signal having a magnitude below the troughs in the said variations but above that of the sensor output signal when the tip of the writing instrument is spaced from the surface.

Preferably the writing surface is white with grey marks thereon since such a surface provides a good distinction between the magnitude of the sensor-output signal when the indicating instrument is in contact with the surface and when it is not in contact therewith.

The invention also includes a method corresponding to the apparatus of the invention for providing signals indicating when an indicating instrument crosses marks on a surface.

Certain embodiments of the invention will now be described by way of example, with reference to the accompanying drawings, in which:-

Figure 1 shows a pen and sensor in use on a writing surface,

Figure 2 is a block circuit diagram of apparatus according to the invention, and

Figure 3 shows a typical graphical output from the pen of Figures 1 and 2.

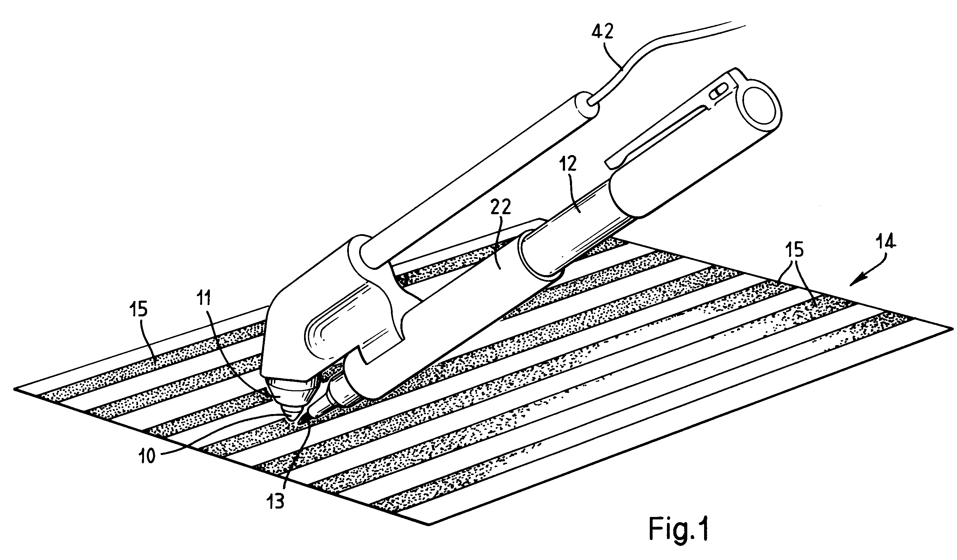

In Figure 1 the lens 10 of a light-sensitive proximity sensor 11 is shown mounted on a fibre tipped pen 12 having a writing tip 13. The lens 10 is positioned to receive light from the point at which the tip 13 contacts a writing surface 14, such as a sheet of paper, carrying parallel grey lines, some of which are designated 15. The focal point of the lens 10 is a short distance in front of the lens and the sensor 11 is mounted on the pen 12 by means of a holder 22 so that the front of the lens is the said short distance from the point at which the tip 13 of the pen makes contact with the writing surface. In the preferred arrangement the parallel lines are formed by a printed pattern using a ratio of 60:40 white to grey areas. In practice there are very many more parallel lines in relation to the size of the pen than is indicated in Figure 1.

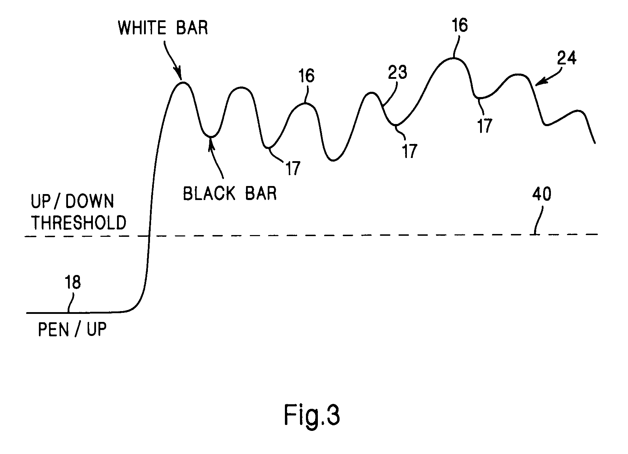

As the pen is used to write on the surface 14 the tip crosses the parallel lines causing variations in the output signal of the proximity sensor 11. These variations may be used for data entry and signature recognition purposes as described in the above mentioned patent specifications. A sensor-output signal of the type shown in Figure 3 is obtained from the proximity sensor and has peaks and troughs some of which are designated 16 and 17 respectively as the pen crosses white areas and grey lines, respectively.

A change in the output of the proximity sensor also occurs when the pen is lifted from the paper, when much less light is received. Such a condition is known as pen/up and it is indicated in Figure 3 by the portion 18 of the sensor output. The pen/up signal is useful in signature recognition, particularly as described in British Patent Specification No. 9024383.3.

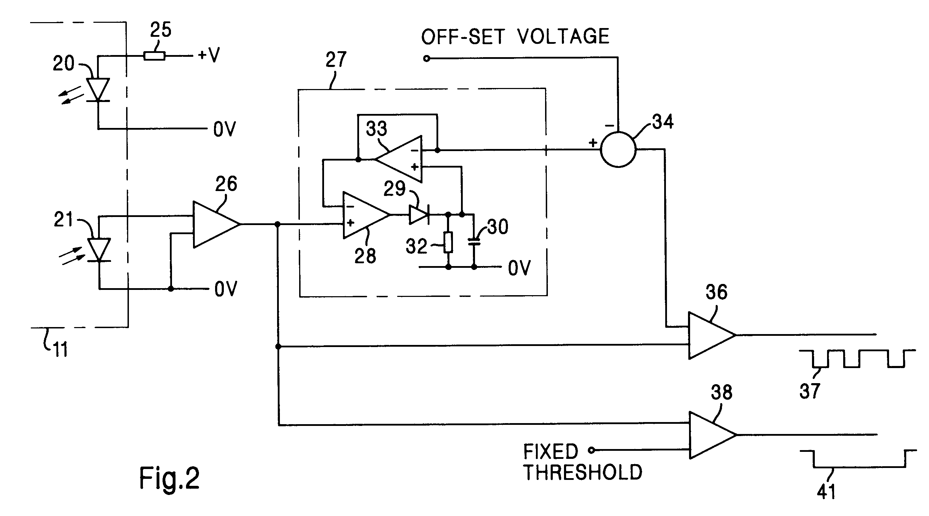

The proximity sensor 11 is commercially available from Hewlett Packard and is sensitive to infra-red light having a wavelength of 820 nm. The sensor 11 includes an LED 20 (see Figure 2) which emits infra-red light at this wavelength and a photosensitive diode 21 which is sensitive to light of this wavelength. The LED 20 is fed from a suitable voltage source ( + V) by way of a resistor 25. The absolute magnitude of the peak 16 varies with the angle which the pen 12 makes with the surface 14 but in general the troughs 17 are approximately the same depth in relation to the peaks regardless of orientation. Orientation of the pen is inclined to change as the pen is used and Figure 3 shows evidence of a change in orientation at about a point 23 and a slow change in orientation occurs in the region 24. A difficulty is therefore experienced in setting a threshold level for the sensor-output signal which will distinguish peaks from troughs and so signal when lines on the surface are crossed. This problem is made more difficult by the necessity to have a further threshold level which distinguishes between the pen being in contact with the surface 14 and the pen lifted from the surface.

Signals from the photosensitive diode 21 are passed to an amplifier 26 and then to a peak detector 27 comprising an operational amplifier 28, a diode 29 and a capacitor 30. The voltage across the capacitor 30 represents the peak reached by the waveform of Figure 3 but a parallel resistor 32 causes this voltage to decay with a time constant which is fast enough to follow variations in values of the peak 16 which correspond to changes in the orientation of the pen 12 during writing. The resistor 32 is also chosen such that in normal writing, the time constant of the capacitor 30 and the resistor 32 causes little decay of the capacitor voltage between peaks 16.

The voltage developed across the capacitor 30 is passed to an operational amplifier 33, connected as a voltage follower, with its output connected to its input, so that the current taken from the capacitor 30 is negligible compared to the current through the resistor 32. The output of the amplifier 33 is also passed to the inverting input of the operational amplifier 28.

The voltage developed across the capacitor 30 and present at the input and output of the amplifier 33 is passed to a summing circuit 34 where an offset voltage is subtracted, the offset voltage being approximately equal to half the mean difference between peaks 16 and the troughs 17. The resultant voltage which forms a variable threshold voltage is applied to one input of a comparator 36. This threshold enables peaks and troughs to be distinguished in the presence of slow variations of pen orientation. The other input of this comparator is the signal of Figure 3 which is received from the output of the amplifier 26. As a result the output of the comparator 36 takes on one of two values when the white space between grey lines is crossed and the other value when the grey lines themselves are crossed. Such a signal is indicated at 37.

The use of a variable threshold has the additional advantages that it allows, at least to some extent, for long term variations in light received by the diode 21, such as caused by variations in paper characteristics and ambient light.

The output of the amplifier 26 is also passed to a comparator 38 which receives a fixed threshold voltage corresponding to the dashed line 40 in Figure 3. Thus the output of the comparator 38 is a two valued signal (see waveform 41 of Figure 2) indicating whether or not the pen 12 is in contact with the writing surface.

The circuits of Figure 2 may be located in the pen and sensor assembly of Figure 1, or in an external circuit coupled by way of the connection 42. Where the circuit of Figure 2 is within the assembly, a connection 42 carries the outputs of the comparators 36 and 38 to apparatus for data entry or signature recognition.

It will be clear from the embodiment specifically described that the invention can be put into operation in many other ways.

## Claims

1. Apparatus for providing signals indicating when the tip (13) of an indicating instrument (12) crosses marks on a surface, comprising

   light-sensitive means (10,11,21) mounted, in operation, to sense variations in light received from a surface (14) at the tip of an indicating instrument and for generating a sensor-output signal having variations in magnitude corresponding to the tip crossing marks (15) on the surface,

   peak-detector means (27) for detecting peaks in the sensor-output signal, and

   comparison means (36) for comparing the sensor-output signal with a threshold signal dependent on the output of the peak detector means,

characterized in that the peak detector means has a time constant which is long in relation to the expected durations of the said variations in magnitude but short in relation to expected changes in the orientation of the indicating instrument relative to the surface, and

the threshold signal has a magnitude less than that of the output of the peak detector means by an amount significantly less than the variation from peak to trough in the said variations, the output of the comparison means being a substantially two value signal with intervals, during which one of the values occurs, corresponding to mark crossings.

2. Apparatus according to Claim 1 characterized in that the threshold signal has a magnitude which is less than that of the output of the peak detector means by an amount approximately equal to half the amplitude of the said variations in magnitude.

3. Apparatus according to Claim 1 or 2 characterized by further comparison means (38) for comparing the sensor-output signal with a further threshold signal having a magnitude below the troughs in the said variations but above that of the sensor output signal when the tip of the writing instrument is spaced from a surface.

4. Apparatus according to any preceding claim characterized by a light source (20) positioned to project light on to the surface at the point indicated, in operation, by the tip of the indicating instrument.

5. Apparatus according to Claim 4 characterized in that the light source emits light at a significant level at one or several wavelengths only and the light sensitive means is more sensitive to light at one or more of the said wavelengths than to light at other wavelengths.

6. Apparatus according to any preceding claim characterized in that the indicating instrument leaves a trail, in operation, on the writing surface.

7. Apparatus according to Claim 6 insofar as dependent on Claim 5, characterized in that the material forming the trail does not reflect light significantly at the wavelength or wavelengths at which the light sensitive means is more sensitive.

Fig.1

Fig.2

EP 0 493 936 A1

WHITE BAR

16

16

23

24

UP / DOWN
THRESHOLD

17

17

17

40

18

PEN / UP

BLACK BAR

Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 132 241 (ESSELTE SECURITY SYSTEMS) <br> * page 2, line 15 - page 3, line 28; claims 1-12; figures * | 1-4 | G07C9/00 <br> G06K9/22 <br> G06K7/10 |
| A | | 5-7 | |
| | --- | | |
| Y | IBM TECHNICAL DISCLOSURE BULLETIN. <br> vol. 18, no. 6, November 1975, NEW YORK US <br> pages 1962 - 1965; <br> PENNY: 'Dynamic threshold setting circuit' <br> * page 1962, line 1 - page 1963, line 14; figures * | 1,2,4 | |
| A | | 3 | |
| | --- | | |
| Y | US-A-4 567 360 (YAMADA) <br> * column 1, line 31 - column 2, line 2; figures * | 3 | |
| | --- | | |
| A | IBM TECHNICAL DISCLOSURE BULLETIN. <br> vol. 17, no. 6, November 1974, NEW YORK US <br> pages 1774 - 1775; <br> HARR: 'Peak detector comparator' <br> * the whole document * | 1,3 | |
| | --- | | **TECHNICAL FIELDS SEARCHED (Int. Cl.5 )** |
| A | US-A-4 028 674 (CHUANG) <br> * abstract; figures * | 1 | G07C <br> G06K |
| | --- | | |
| A | DE-A-3 143 383 (ASEA) | | |
| | --- | | |
| A | EP-A-0 115 236 (L'ETAT FRANCAIS) | | |
| | --- | | |
| A | US-A-4 121 121 (GABELER) | | |
| | ----- | | |

The present search report has been drawn up for all claims

| Place of search | Date of completion of the search | Examiner |
|---|---|---|
| THE HAGUE | 10 APRIL 1992 | MEYL D. |

EPO FORM 1503 03.82 (P0401)